(19) Europäisches Patentamt
European Patent Office
Office européen des brevets

(11) EP 3 288 160 B1

(12) **EUROPEAN PATENT SPECIFICATION**

(45) Date of publication and mention of the grant of the patent:
**04.12.2019 Bulletin 2019/49**

(21) Application number: **16783042.1**

(22) Date of filing: **11.04.2016**

(51) Int Cl.:
***H02K 19/10*** *(2006.01)* ***H02K 1/24*** *(2006.01)*

(86) International application number:
**PCT/JP2016/061680**

(87) International publication number:
**WO 2016/171021 (27.10.2016 Gazette 2016/43)**

(54) **SYNCHRONOUS RELUCTANCE MOTOR**

SYNCHRON-RELUKTANZMOTOR

MOTEUR SYNCHRONE À RÉLUCTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2015 JP 2015089331**

(43) Date of publication of application:
**28.02.2018 Bulletin 2018/09**

(73) Proprietors:
- **Kabushiki Kaisha Toshiba, Inc.**
**Tokyo 105-8001 (JP)**
- **Toshiba Infrastructure Systems & Solutions Corporation**
**Kawasaki-shi, Kanagawa 212-8585 (JP)**

(72) Inventors:
- **TAKEUCHI, Katsutoku**
**Tokyo 105-8001 (JP)**
- **MATSUSHITA, Makoto**
**Tokyo 105-8001 (JP)**
- **MISU, Daisuke**
**Tokyo 105-8001 (JP)**
- **TAKAHASHI, Norio**
**Tokyo 105-8001 (JP)**
- **HASHIBA, Yutaka**
**Tokyo 105-8001 (JP)**
- **HASEBE, Toshio**
**Tokyo 105-8001 (JP)**

(74) Representative: **AWA Sweden AB**
**Junkersgatan 1**
**582 35 Linköping (SE)**

(56) References cited:
**EP-A1- 2 790 295**
**JP-A- 2002 165 427**
**JP-A- 2005 006 416**
**JP-A- 2008 283 775**
**US-A- 5 903 080**

- **MURAKAMI H ET AL: "Rotor design and control method of synchronous reluctance motor with multi-flux barrier", POWER ELECTRONIC DRIVES AND ENERGY SYSTEMS FOR INDUSTRIAL GROWTH, 1998 . PROCEEDINGS. 1998 INTERNATIONAL CONFERENCE ON PERTH, WESTERN AUSTRALIA 1-3 DEC. 1998, PISCATAWAY, NJ, USA,IEEE, vol. 1, 1 December 1998 (1998-12-01), pages 391-396, XP010720707, ISBN: 978-0-7803-4879-0**
- **YUKIO HONDA ET AL.: 'Rotor Design and Performances of a Multi-Flux Barrier Synchronous Reluctance Motor' THE TRANSACTIONS OF THE INSTITUTE OF ELECTRICAL ENGINEERS OF JAPAN D vol. 118, no. 10, 19 December 2008, pages 1177 - 1184, XP010720707**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 288 160 B1

## Description

### FIELD

Embodiments of the present invention relate to a synchronous reluctance motor.

### BACKGROUND

A synchronous reluctance motor includes a rotor and a stator. The rotor includes a shaft rotatably supported and extending in an axial direction at a center of a rotational axis, and a rotor core externally fitted and fixed to the shaft and in which a plurality of flux barriers are formed. The stator includes a stator core having a plurality of teeth disposed on an inner surface facing an outer surface of the rotor core and being spaced apart from the rotor core. The plurality of teeth are arranged to be spaced apart from each other in a circumferential direction of the staor core and multipole multiphase armature windings respectively wound around the plurality of teeth. Thus, the synchronous reluctance motor rotates the shaft using a reluctance torque generated by the flux barriers.

In this manner, since a reluctance torque is generated by the flux barriers, a proportion of the area occupied by the flux barriers to the entire area on a main surface, perpendicular to the rotational axis, of the rotor core (hereinafter referred to as an occupied area proportion of the flux barrier) greatly affects characteristics of the synchronous reluctance motor.

Conventionally, it is known that the torque performance of a synchronous reluctance motor can be maximized when the occupied area proportion of the flux barrier to the entire area on the main surface of the rotor core is set to appropriately 33%.

However, when a motor is driven at a variable speed using an inverter or the like, a torque required for the motor generally decreases as the rotation speed increases. That is, the torque becomes the largest in a low speed range at the time of starting, and requires a constant torque performance. Also, in a medium speed range, the torque decreases in inverse proportion to the rotation speed, and an output becomes a constant output (output torque × rotation speed). Further, in a high speed range, a torque reduction becomes large. Therefore, as a drive control method of a motor driven at a variable speed, for example, from the start to the low speed range or the medium speed range, it is common to perform a V/F constant control in which a voltage/frequency ratio is constant. In contrast, in a high speed range, a field-weakening control in which a maximum voltage value is controlled to be constant is performed.

That is, depending on the performance (withstanding voltage or maximum current) of a switching element (insulated gate bipolar transistor (IGBT), metal oxide semiconductor field effect transistor (MOS-FET), and the like), a voltage and a current output by an inverter are limited. In general, as a withstanding voltage or a maximum current becomes larger, the cost of a device becomes higher, and thus it is preferable to reduce a voltage or current as much as possible. Since an induced voltage is proportional to a frequency (rotation speed) according to Faraday's law, a terminal voltage of a motor when the rotation speed is low has a margin with respect to a maximum voltage of the inverter. In this range, it is common to perform control so that the current is minimized (maximum torque control in which only a torque current flows). This is V/F constant control. Further, the torque current refers to a current supplied to the armature windings to generate a torque in the rotor core.

On the other hand, in the high speed range, the terminal voltage of the motor becomes equal to the maximum voltage of the inverter. In order to rotate at a rotation speed higher than the maximum voltage, it is necessary to perform control so that a weakening current (advancing a phase of the current) is supplied in addition to the torque current to negate the induced voltage. This is field-weakening control. That is, as the rotation speed increases, a ratio of the weakening current to the torque current increases, and the motor current required for a unit output torque increases.

Therefore, in a constant speed synchronous reluctance motor which always operates with maximum torque control, it is preferable to set a ratio of the occupied area of the flux barriers to appropriately 33%. However, in the synchronous reluctance motor that performs variable speed drive, when the ratio of the occupied area of the flux barriers is set to appropriately 33%, the motor performance at the time of field-weakening control is significantly degraded. Also, when the motor performance is degraded, the current required for driving the synchronous reluctance motor increases, and an expensive switching element with a large current capacity is required. As a result, the cost of the entire motor drive system may increase.

"Rotor design and control method of synchronous reluctance motor with multi-flux barrier" (Murakami H et. Al, Power Electronic Drives and Energy Systems for Industrial Growth, 1998. Proceedings. 1998 International Conference on Perth, Western Australia 1-3 Dec. 1998, Piscataway, NJ, USA, IEEE, vol. 1, 1 December 1998 (1998-12-01), pages 391-396, XP010720707, ISBN: 978-0-7803-4879-0) discloses a rotor design of a synchronous reluctance motor with multiple flux barriers. In this case, the studies of the number of barriers, bridge width and other elements are important.

US 5 903 080 A relates to a structure of a rotor for improving torque ripple reduction of a reluctance type synchronous motor used for feed drive and positioning of a machining spindle of a machine tool. More specifically, the invention aims to improve the characteristics by adjusting magnetic reluctance change of both a rotor and a stator relative to a rotation angle of the motor.

PRIOR ART DOCUMENTS

PATENT DOCUMENTS

[PATENT DOCUMENT 1] Japanese Unexamined Patent Application, First Publication No. 2004-96909

SUMMARY

PROBLEMS TO BE SOLVED BY THE INVENTION

The present invention is directed to providing a synchronous reluctance motor capable of improving motor performance.

MEANS FOR SOLVING THE PROBLEMS

A synchronous reluctance motor according to the invention includes a rotating shaft, a rotor core, a stator core, and multipole multiphase armature windings. The rotating shaft is extending along a central axis. The rotor core is externally fitted and fixed to the rotating shaft. The stator core includes, on an inner surface of the stator core, a plurality of teeth protruding towards the central axis and arranged in a circumferential direction. The multipole multiphase armature windings are respectively wound around the plurality of teeth. In addition, a plurality of flux barriers (11) are formed in each quarter- circumferential angular region in the rotor core (9), wherein said flux barriers (11) are a plurality of hollow portions. The plurality of hollow portions are curved toward a radial inner side so that each of the centers in the circumferential direction is positioned on a radial innermost side in the quarter-circumference circumferential angular region of the rotor core, and the plurality of hollow portions are disposed side by side in a radial direction. Then, the ratio of the occupied area of the flux barriers (11) to the entire area on a main surface , perpendicular to the rotational axis, of the rotor core (9) is set to 35% to 39%.

BRIEF DESCRIPTION OF THE DRAWINGS

FIG. 1 is a cross-sectional view perpendicular to a rotating shaft showing a configuration of a portion of a synchronous reluctance motor of an embodiment.
FIG. 2 is a graph showing a change in torque of the synchronous reluctance motor in V/F constant control of the embodiment.
FIG. 3 is a graph showing a change in current required per unit output torque of the synchronous reluctance motor in V/F constant control of the embodiment.
FIG. 4 is a graph showing a change in power factor of the synchronous reluctance motor in field-weakening control of the embodiment.
FIG. 5 is a graph showing a change in current required per unit output torque of the synchronous reluctance motor in field-weakening control of the embodiment.
FIG. 6 is a graph showing a change in variable speed motor current indicator in the synchronous reluctance motor of the embodiment.
FIG. 7 is a graph showing a range from a minimum value of the variable speed motor current indicator to a value increased by 2% in the synchronous reluctance motor of the embodiment.

DETAILED DESCRIPTION

Hereinafter, a synchronous reluctance motor with respect to an embodiment will be described with reference to the drawings.
FIG. 1 is a cross-sectional view perpendicular to a rotating shaft 8 showing a configuration of a portion of a synchronous reluctance motor 1. In FIG. 1, a quarter sector of the synchronous reluctance motor 1, that is, only a quarter-circumferential region is shown.
As shown in the same drawing, the synchronous reluctance motor 1 includes a stator 2 in a substantially cylindrical shape and a rotor 3 provided on the inner side of the stator 2 in a radial direction and provided to be rotatable with respect to the stator 2. Further, the stator 2 and the rotor 3 are disposed in a state in which central axes thereof are positioned on a common axis. Hereinafter, the above-described common axis will be referred to as a central axis O, a direction perpendicular to the central axis O will be referred to as a radial direction, and a direction of revolving around the central axis O will be referred to as a circumferential direction.

The stator 2 has a substantially cylindrical stator core 4. The stator core 4 can be formed by stacking a plurality of electromagnetic steel plates or by compression-molding a soft magnetic powder. On an inner surface of the stator core 4, a plurality of teeth 5 protruding toward the central axis O and arranged at regular intervals in the circumferential direction are integrally molded. The teeth 5 are formed to have a substantially rectangular cross section. Also, slots 6 are formed respectively between the adjacent teeth 5. Through these slots 6, armature windings 7 are wound around each tooth 5.

An insulator having an insulating property is attached on the stator core 4, or the entire outer surface of the staor core 4 is covered with an insulating film (none of them are shown). Also, the armature windings 7 are wound around each tooth 5 from above the insulator or the insulating film.

The rotor 3 includes the rotating shaft 8 extending along the central axis O and a substantially columnar rotor core 9 externally fitted and fixed to the rotating shaft 8.

The rotor core 9 can be formed by stacking a plurality of electromagnetic steel plates or by compression-molding a soft magnetic powder. An outer diameter of the rotor core 9 is set so that a predetermined air gap G is formed between the rotor core 9 and each of the teeth 5 facing thereto in the radial direction.

In addition, a through-hole 10 passing through the central axis O is formed at a radial center of the rotor core 9. The rotating shaft 8 is press-fitted or the like to the through-hole 10, and thereby the rotating shaft 8 and the rotor core 9 rotate integrally.

Further, a plurality (for example, three in the present embodiment) of flux barriers 11 are formed in each quarter-circumferential angular region in the rotor core 9. Each of the flux barriers 11 is a plurality of hollow portions 18 formed to have a substantially arc-shaped cross section curved toward a radial inner side so that each of the centers in the circumferential direction is positioned on a radial innermost side so as to follow a flow of a q-axis magnetic flux.

Also, the plurality of hollow portions 18 are disposed side by side in the radial direction so that each center in the circumferential direction is positioned on a predetermined straight line L1 extending in the radial direction. Further, distances L2 between each of opposite ends in the circumferential direction of the plurality of hollow portions 18 and an outer circumferential portion of the rotor core 9 are set to be substantially the same. Therefore, the plurality of hollow portions 18 are formed so that a circumferential length of a hollow portion 18 positioned on the radial inner side is longer than a circumferential length of a hollow portion 18 positioned on the radial outer side.

Further, the predetermined straight line L1 is a straight line passing through a circumferential center of the quarter- circumferential angular region of the rotor core 9 and the central axis O. Also, as the flux barriers 11, the hollow portions 18 may be filled with a nonmagnetic material (for example, a nonconductive resin), or a plate-shaped nonmagnetic material corresponding to each of the hollow portions 18 may be inserted. That is, the flux barriers 11 may be configured so that a magnetic flux cannot easily pass therethrough.

In addition, since a bridge 12 (the distance L2 between each of the opposite ends in the circumferential direction of the plurality of hollow portions 18 and the outer circumferential portion of the rotor core 9) is provided on the outer circumferential portion of the rotor core 9, the rotor core 9 is integrated into one body even in a state in which the flux barriers 11 are formed.

Further, a position of the bridge 12 is not limited to the outer circumferential portion of the rotor core 9, and may be at any position as long as the rotor core 9 is integrated into one body.

For example, the bridge 12 may be formed in the flux barriers 11 (hollow portions 18). When the bridge 12 is formed, a rigidity of the rotor core 9 (hollow portions 18) can be increased. Here, when the bridge 12 is formed in the hollow portions 18, it is formed so that a magnetic flux is saturated in the bridge 12. With the configuration as above, it is possible to prevent a magnetic flux from passing through the flux barriers 11.

Here, ratio of an occupied area of the flux barriers 11, that is, ratio of an occupied area of the flux barriers 11 to an entire area on a main surface of the rotor core 9 (a quadrupled area of a hatch portion in FIG. 1) is set to 35% to 39%. Hereinafter, the ratio of the occupied area of the flux barriers 11 will be described in detail.

FIG. 2 is a graph showing a change in torque of the synchronous reluctance motor 1 in V/F constant control. More specifically, FIG. 2 is a graph showing a change in torque under V/F constant control when the vertical axis is a torque and the horizontal axis is the ratio [%] of the occupied area of the flux barriers 11. In FIG. 2, the ratio of the occupied area of the flux barriers 11 is changed while maintaining a constant torque current.

FIG. 3 is a graph showing the reciprocal of the torque characteristics T1 in FIG. 2. The reciprocal of the torque characteristics may be regarded as a torque current required per unit output torque "when there is no voltage limitation (when a voltage is not taken into consideration)." That is, FIG. 3 is a graph showing a change in current I1 required per unit output torque in V/F constant control when the vertical axis is the current I1 [%] required per unit output torque and the horizontal axis is the ratio [%] of the occupied area of the flux barriers 11. Further, a minimum value of the current I1 required per unit output torque is defined as 100%.

As shown in the same drawing, when the ratio of the occupied area of the flux barriers 11 is set to appropriately 33%, it can be confirmed that the current I1 required per unit output torque is minimized in V/F constant control.

Here, as described above, at the time of field-weakening control, since a voltage limitation occurs due to a capacity of an inverter or the like, an influence of the voltage is necessarily considered. Therefore, at the time of field-weakening control, it is difficult to evaluate motor performance with the torque characteristics T1 as shown in FIG. 2. Therefore, it is evaluated as follows.

FIG. 4 is a graph showing a change in power factor of the synchronous reluctance motor 1 in field-weakening control. More specifically, FIG. 4 is a graph showing a change in power factor when the vertical axis is a power factor and the horizontal axis is the occupied area proportion of the flux barriers 11.

The power factor is a ratio of an effective power to an apparent power, and a power factor cos θ is defined as a physical quantity that satisfies

$$\cos\theta = 2\pi NT/VI \cdots (1)$$

when the power factor is cos θ, a rotation speed of the rotor 3 is N, a torque is T, a voltage is V, and a current is I. (Strictly speaking, a value obtained by adding a loss to the output 2πNT is the effective power, but the value is small and omitted for the sake of simplifying the description.)

As shown in FIG. 4, it can be confirmed that the power factor cos θ of the synchronous reluctance motor 1 is maximized when the ratio of the occupied area of the flux barriers 11 is set to appropriately 43%.

Here, the power factor cos θ satisfies Expression (1). When considered at an arbitrary rotation speed N during field-weakening control, since the rotation speed N and the voltage V are constant, the reciprocal 1/cos θ of the power factor is proportional to a value I/T obtained by dividing the current by the torque. That is, the reciprocal of the field-weakening control can be considered as a current required per unit output torque "when there is a voltage limitation." Therefore, the motor performance of the synchronous reluctance motor 1 in the field-weakening control in which there is a voltage limitation can be evaluated by the reciprocal of the power factor cos θ.

FIG. 5 is a graph showing the reciprocal of the power factor cos θ in FIG. 4. That is, FIG. 5 is a graph showing a change in current 12 required per unit output torque in field-weakening control when the vertical axis is the current 12 [%] required per unit output torque and the horizontal axis is the occupied area proportion [%] of the flux barriers 11. Further, a minimum value of the current 12 required per unit output torque is defined as 100%.

As shown in the same drawing, when the ratio of the occupied area of the flux barriers 11 is set to appropriately 43%, it can be confirmed that the current 12 required per unit output torque is minimized in field-weakening control. Also, as conventionally defined, when the ratio of the occupied area of the flux barriers 11 is set to appropriately 33%, in the field-weakening control, it can be confirmed that the current is greatly increased and the motor performance at the time of field-weakening control is remarkably degraded.

Incidentally, while the V/F constant control and the field-weakening control have been individually evaluated and an optimum ratio of the occupied area of the flux barriers 11 optimum for each control has been obtained, when two controls of the V/F constant control and the field-weakening control (hereinafter simply referred to as two controls) are performed with one synchronous reluctance motor 1, it is necessary to simultaneously optimize the two controls. Therefore, between the value of the current I1 required per unit output torque in the V/F constant control and the value of the current 12 required per unit output torque in the field-weakening control, a greater one is defined as a variable speed motor current indicator S1.

That is, the variable speed motor current indicator S1 is represented by a function h(x) which can be defined by a function f(x) and a function g(x), and the motor performance when the two controls are performed with one synchronous reluctance motor 1 is evaluated by the function h(x). Here, the function h(x) can be expressed by the following Expression (2). In the present embodiment, the function f(x) indicates the current I1 required per unit output torque when there is no voltage limitation, and the function g(x) indicates the current 12 required per unit output torque when there is a voltage limitation. Also, a value at which the variable speed motor current indicator S1 is minimized is designed to be a current in which the two controls with one synchronous reluctance motor 1 are taken into account is minimized.

[Math. 1]

$$h(x) = \begin{cases} f(x) & (f(x) > g(x)) \\ g(x) & (f(x) \le g(x)) \end{cases} \quad \cdots (2)$$

FIG. 6 is a graph showing a change in the variable speed motor current indicator S1 when the vertical axis is the variable speed motor current indicator S1 [%] and the horizontal axis is the ratio [%] of the occupied area of the flux barriers 11.

As shown in the same drawing, it can be confirmed that the variable speed motor current indicator S1 is the smallest when the occupied area proportion of the flux barriers 11 is set to appropriately 37.5%. This means that the current required for operating the synchronous reluctance motor 1 over the entire variable speed range is minimized.

FIG. 7 is a graph showing a range from a minimum value of the variable speed motor current indicator S1 to a value increased by 2% on the graph showing a change in the variable speed motor current indicator S1 shown in Fig.FIG. 6.

It can be confirmed from the same drawing that, when the ratio of the occupied area of the flux barriers 11 is set to 35% to 39%, a rise of the variable speed motor current indicator S1 from the minimum value can be suppressed to be within 2%. That is, practically, when the ratio of the occupied area of the flux barriers 11 is set to 35% to 39%, the motor current required for variable speed driving cannot easily increase and there is no need to increase a current capacity of switching elements of an inverter. On the other hand, when the ratio of the occupied area of the flux barriers 11 is set to a value deviating from 35% to 39%, the motor current required for operating over the entire variable speed range is greatly increased, and an expensive switching element with a large current capacity is required. As a result, costs of the entire system are increased.

Therefore, according to the above-described embodiment, even when the synchronous reluctance motor 1 is driven by the two control methods (that is, variable speed drive), it is possible to prevent the motor current from being significantly increased by setting the ratio of the occupied area of the flux barriers 11 to 35% to 39%. Therefore, it is possible to provide a synchronous reluctance motor 1 which has excellent motor performance over the entire operation range, in which a current capacity of switching elements of the inverter can be minimized, and in which costs of the entire motor drive system can be minimized.

Further, since the flux barriers 11 formed in the rotor core 9 are formed to have a substantially arc-shaped cross section curved toward the radial inner side to follow a flow of the q-axis magnetic flux, it is possible to efficiently generate a reluctance torque.

Further, in the above-described embodiment, the case in which each of the flux barriers 11 is formed to have a substantially arc-shaped cross section curved toward the radial inner side to follow a flow of the q-axis magnetic flux has been described. However, the present invention is not limited thereto, and it may be formed so that a reluctance torque is generated by the flux barriers 11 and a shape of the flux barriers 11 can be arbitrarily set.

In addition, in the above-described embodiment, the case in which three flux barriers 11 are formed in each quarter-circumference circumferential angular region of the rotor core 9 has been described, but the present invention is not limited thereto, and the number of flux barriers 11 to be formed can be arbitrarily set.

According to at least one embodiment described above, even when the synchronous reluctance motor 1 is driven by the two control methods, it is possible to prevent the motor current from being significantly increased by setting the ratio of the occupied area of the flux barriers 11 to 35% to 39%. Therefore, it is possible to provide a synchronous reluctance motor 1 which can minimize a current capacity of a switching element of the inverter and in which costs of the entire motor drive system can be minimized.

In addition, since the flux barriers 11 formed in the rotor core 9 are formed to have a substantially arc-shaped cross section curved toward the radial inner side to follow a flow of the q-axis magnetic flux, it is possible to efficiently generate a reluctance torque.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the inventions. The accompanying claims define the scope of the invention.

DESCRIPTION OF REFERENCE NUMERAL

1 Synchronous reluctance motor
2 Stator
3 Rotor
4 Stator core
5 Teeth
7 Armature winding
8 Rotating shaft (shaft)
9 Rotor core

11 Flux barrier
18 Hollow portion

## Claims

1. A synchronous reluctance motor comprising:

a rotating shaft (8) extending along a central axis (O);
a rotor core (9) externally fitted and fixed to the rotating shaft (8);
a stator core (4) including, on an inner surface of the stator core (4), a plurality of teeth (5) protruding towards the central axis (O) and arranged at regular intervals in a circumferential direction; and
multipole multiphase armature windings (7) respectively wound around the plurality of teeth (5),

**characterized in that**

a plurality of flux barriers (11) are formed in each quarter- circumferential angular region in the rotor core (9), wherein said flux barriers (11) are a plurality of hollow portions (18),
the plurality of hollow portions (18) are curved toward a radial inner side so that each of the centers in the circumferential direction is positioned on a radial innermost side in the quarter-circumference circumferential angular region of the rotor core, the plurality of hollow portions (18) are disposed side by side in a radial direction, and
the ratio of the occupied area of the flux barriers (11) to the entire area on a main surface, perpendicular to the rotational axis, of the rotor core (9) is set to 35% to 39%.

2. The synchronous reluctance motor according to claim 1, wherein the synchronous reluctance motor (1) is variable-speed driven and performs field-weakening control which reduces an induced voltage generated in accordance with rotation of the motor.

## Patentansprüche

1. Synchron-Reluktanzmotor, der umfasst:

eine Drehwelle (8), die sich entlang einer Mittelachse (O) erstreckt;
einen Rotorkern (9), der außen auf die Drehwelle (8) aufgesetzt und daran befestigt ist;
einen Statorkern (4), der an einer Innenfläche des Statorkerns (4) mehrere Zähne (5) umfasst, die hin zu der Mittelachse (O) hervorstehen und in regelmäßigen Intervallen in einer Umfangsrichtung angeordnet sind; und
mehrpolige Mehrphasen-Ankerwicklungen (7), die jeweils um die mehreren Zähne (5) gewickelt sind,
**dadurch gekennzeichnet, dass**
mehrere Flusssperren (11) in jeder Viertelumfangswinkelregion in dem Rotorkern (9) gebildet sind, wobei die Flusssperren (11) mehrere hohle Abschnitte (18) sind,
die mehreren hohlen Abschnitte (18) derart hin zu einer radial inneren Seite gebogen sind, dass jede von den Mitten in der Umfangsrichtung an einer radial innersten Seite in der Viertelumfangswinkelregion des Rotorkerns positioniert ist, wobei die mehreren hohlen Abschnitte (18) nebeneinander in einer radialen Richtung angeordnet sind und das Verhältnis der eingenommenen Oberfläche der Flusssperren (11) zur gesamten Oberfläche auf einer Hauptfläche senkrecht zur Drehachse des Rotorkerns (9) auf 35% bis 39% eingestellt ist.

2. Synchron-Reluktanzmotor nach Anspruch 1, wobei der Synchron-Reluktanzmotor (1) mit einer variablen Drehzahl angetrieben wird und Feldschwächungssteuerung durchführt, die eine induzierte Spannung verringert, die gemäß der Drehung des Motors erzeugt wird.

## Revendications

1. Moteur synchrone à réluctance comprenant :

un arbre de rotation (8) s’étendant le long d’un axe central (O) ;

un noyau de rotor (9) agencé extérieurement et fixé à l'arbre de rotation (8) ;
un noyau de stator (4) incluant, sur une surface intérieure du noyau de stator (4), une pluralité de dents (5) faisant saillie vers l'axe central (O) et agencé à des intervalles réguliers dans un sens circonférentiel ; et
des enroulements d'induit multiphasés multipolaires (7) enroulés respectivement autour de la pluralité de dents (5),
**caractérisé en ce que**
une pluralité de barrières de flux (11) sont formées dans chaque région angulaire de quart de circonférence dans le noyau de rotor (9), dans lequel lesdites barrières de flux (11) sont une pluralité de portions creuses (18), la pluralité de portions creuses (18) sont incurvées vers un côté intérieur radial de sorte que chacun des centres dans le sens circonférentiel soit positionné sur un côté le plus intérieur radial dans la région angulaire circonférentielle de quart de circonférence du noyau de rotor, la pluralité de portions creuses (18) sont disposées côte à côte dans un sens radial, et
le rapport de l'aire occupée des barrières de flux (11) sur l'aire totale sur une surface principale perpendiculaire à l'axe de rotation du noyau de rotor (9) est réglé à 35 % à 39 %.

**2.** Moteur synchrone à réluctance selon la revendication 1, dans lequel le moteur synchrone à réluctance (1) est entraîné à vitesse variable et effectue une régulation de défluxage qui réduit une tension induite générée en fonction d'une rotation du moteur.

FIG. 1

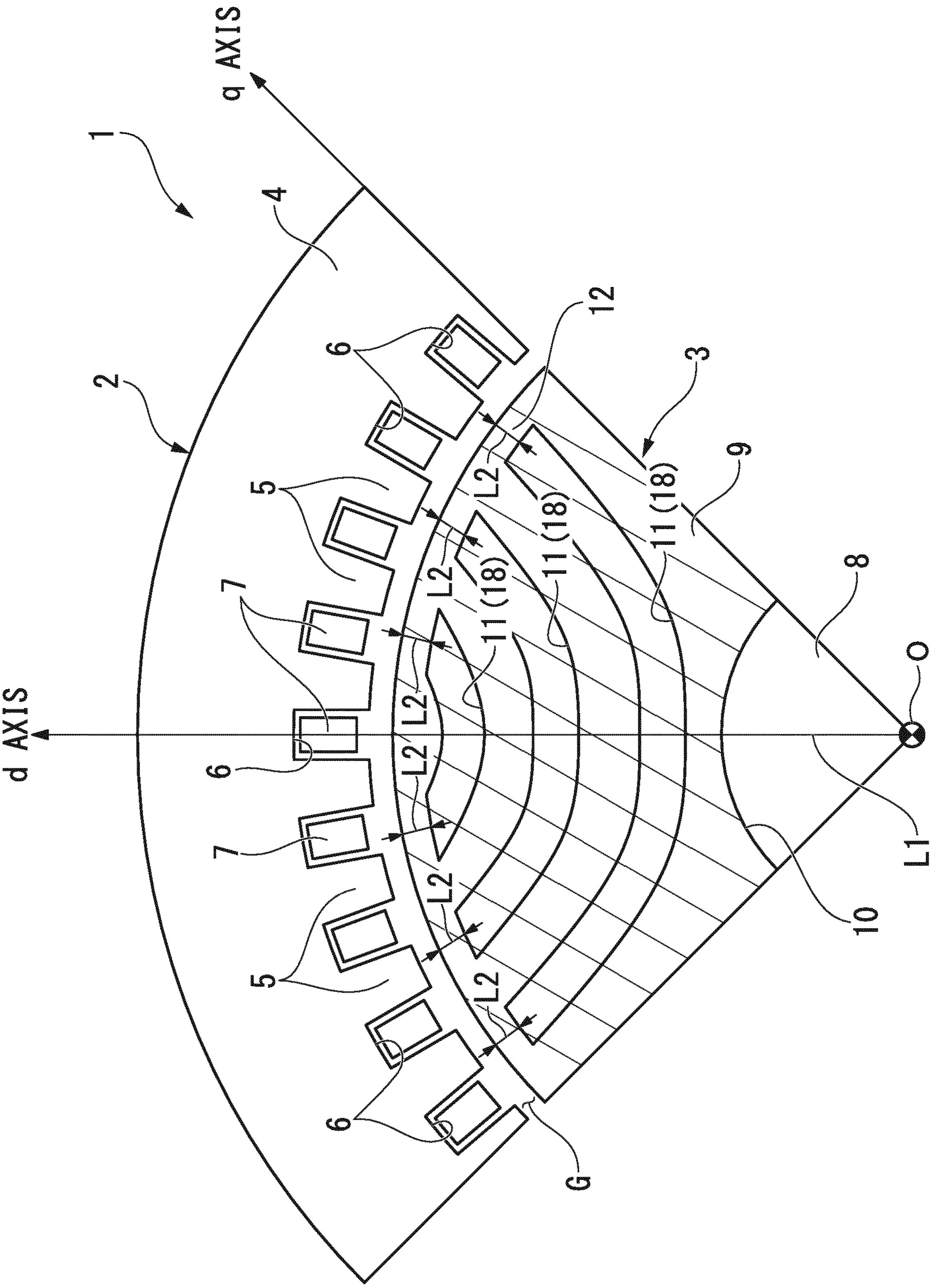

# FIG. 2

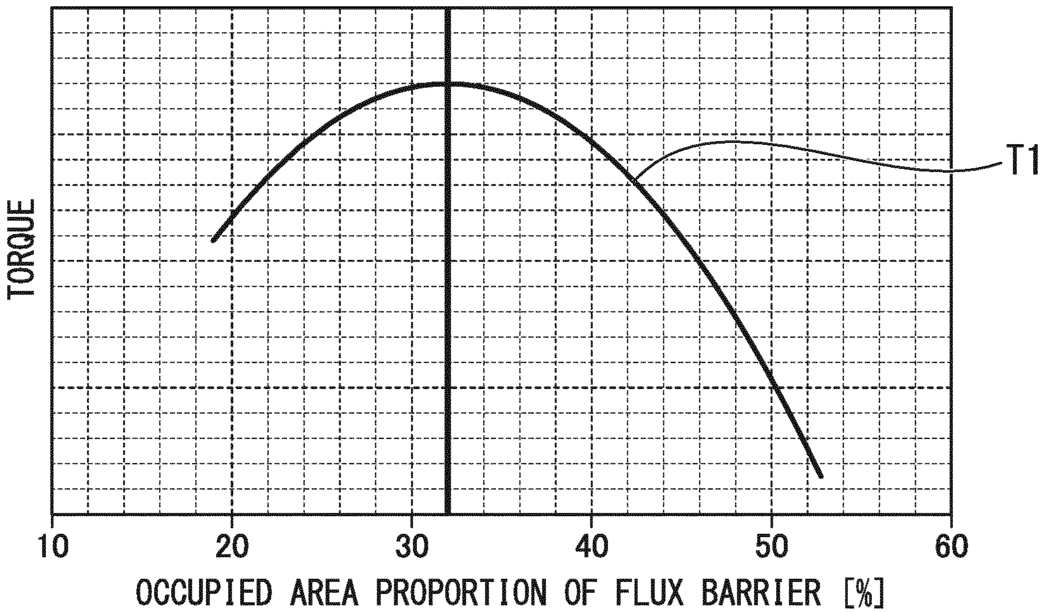
TORQUE
T1
10
20
30
40
50
60
OCCUPIED AREA PROPORTION OF FLUX BARRIER [%]

# FIG. 3

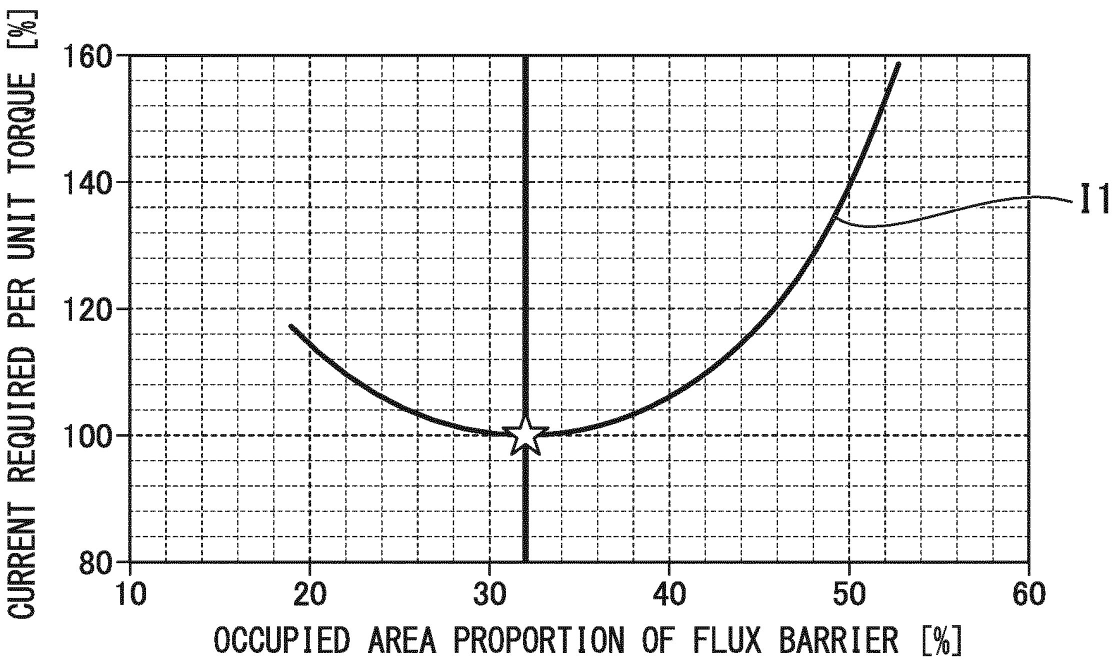
CURRENT REQUIRED PER UNIT TORQUE [%]
160
140
120
100
80
I1
10
20
30
40
50
60
OCCUPIED AREA PROPORTION OF FLUX BARRIER [%]

FIG. 4

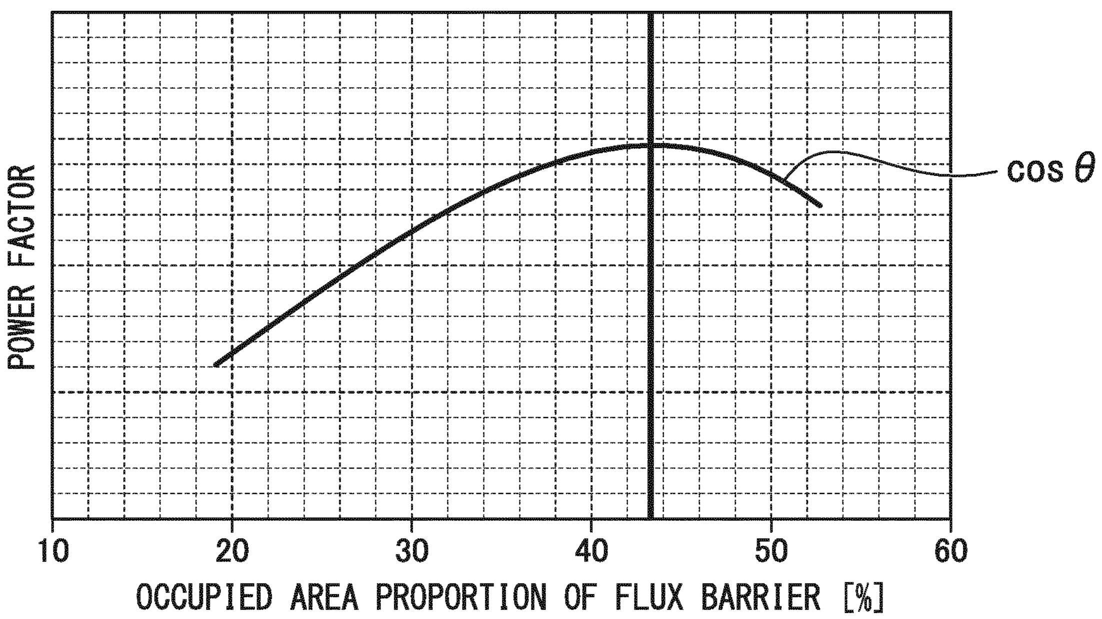
POWER FACTOR
cos θ
10
20
30
40
50
60
OCCUPIED AREA PROPORTION OF FLUX BARRIER [%]

FIG. 5

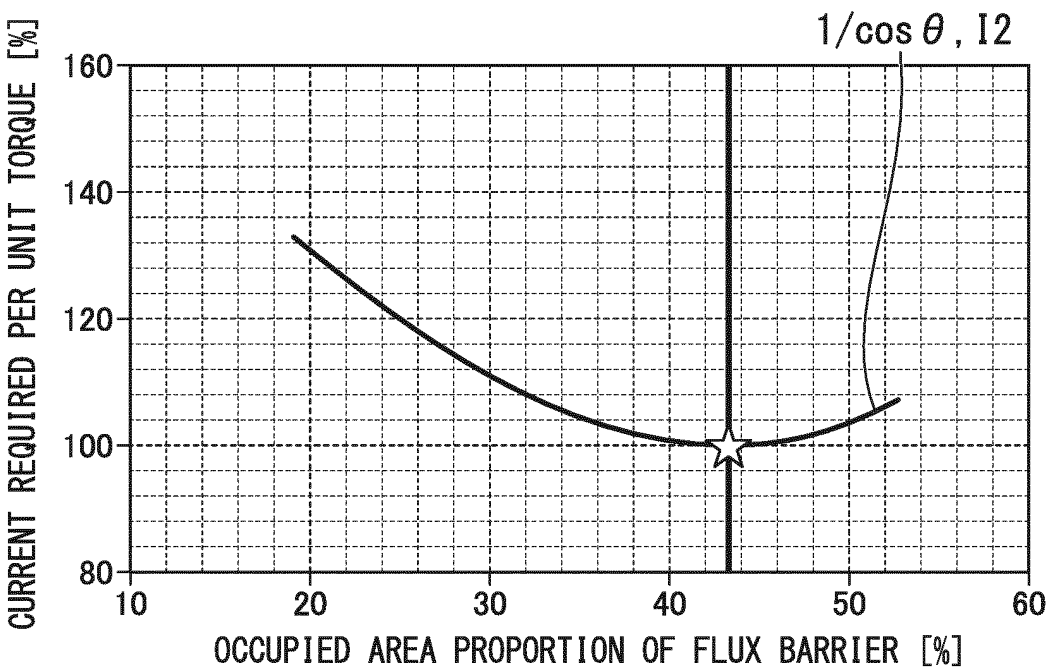
1/cos θ, I2
CURRENT REQUIRED PER UNIT TORQUE [%]
160
140
120
100
80
10
20
30
40
50
60
OCCUPIED AREA PROPORTION OF FLUX BARRIER [%]

# FIG. 6

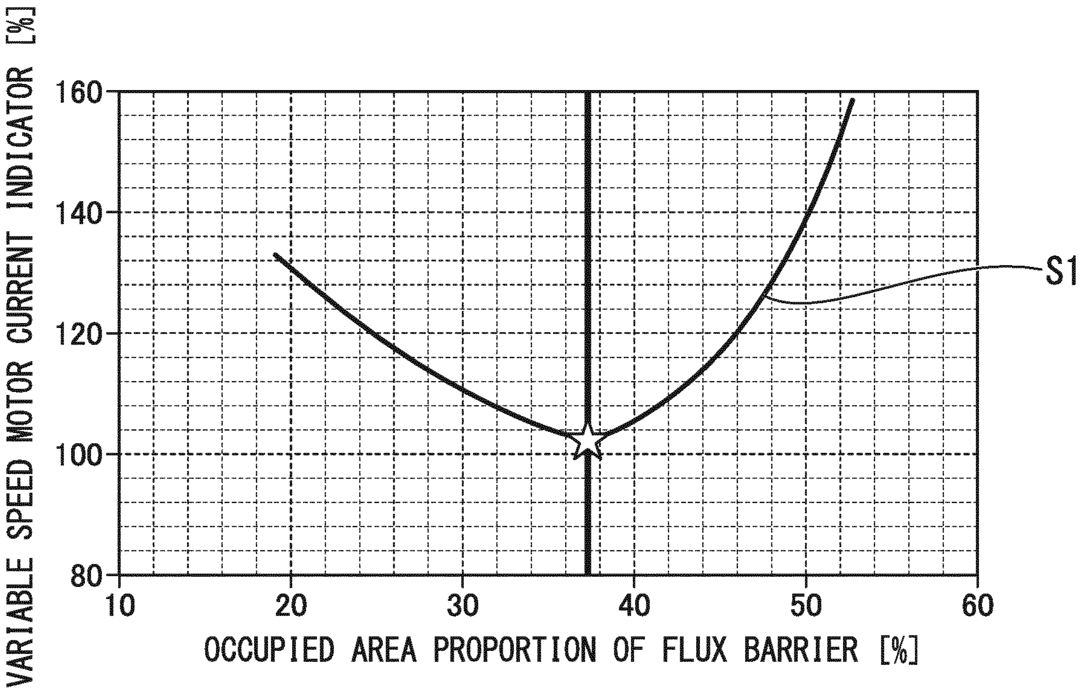
VARIABLE SPEED MOTOR CURRENT INDICATOR [%]
160
140
120
100
80
10
20
30
40
50
60
OCCUPIED AREA PROPORTION OF FLUX BARRIER [%]
S1

# FIG. 7

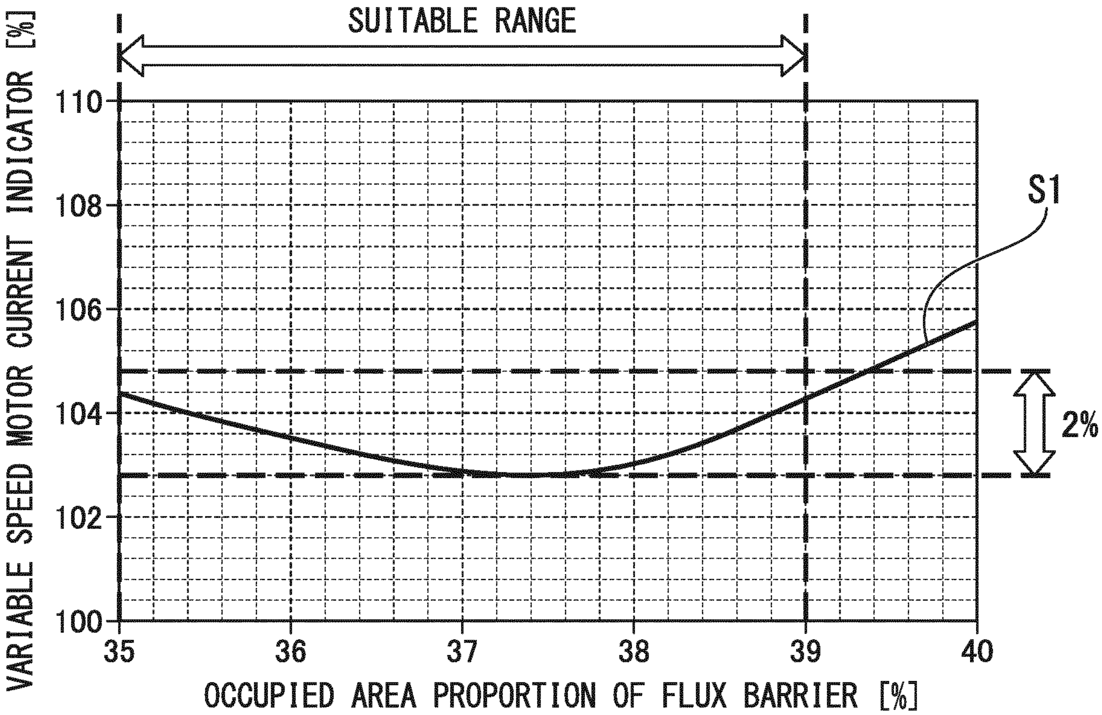
SUITABLE RANGE
VARIABLE SPEED MOTOR CURRENT INDICATOR [%]
110
108
106
104
102
100
35
36
37
38
39
40
OCCUPIED AREA PROPORTION OF FLUX BARRIER [%]
S1
2%

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5903080 A
- JP 2004096909 A


### Non-patent literature cited in the description


- Rotor design and control method of synchronous reluctance motor with multi-flux barrier. **MURAKAMI H.** Power Electronic Drives and Energy Systems for Industrial Growth, 1998. Proceedings. 1998 International Conference on Perth. IEEE, 01 December 1998, vol. 1